(19) Europäisches Patentamt

European Patent Office

Office européen des brevets

(11) EP 1 115 291 B1

(12) **FASCICULE DE BREVET EUROPEEN**

(45) Date de publication et mention
de la délivrance du brevet:
**11.05.2005 Bulletin 2005/19**

(21) Numéro de dépôt: **99941687.8**

(22) Date de dépôt: **03.09.1999**

(51) Int Cl.⁷: **A21D 8/02**, A21D 13/08,
A21C 3/04, A21C 11/20

(86) Numéro de dépôt international:
**PCT/FR1999/002104**

(87) Numéro de publication internationale:
**WO 2000/016635 (30.03.2000 Gazette 2000/13)**

(54) **PROCEDE DE FABRICATION D'UNE BANDE DE PATE CRUE PETRIE ET EXTRUDEE**

VERFAHREN ZUR HERSTELLUNG EINES UNGEKOCHTEN UND EXTRUDIERTEN TEIGBANDES

METHOD FOR MAKING A STRIP OF KNEADED AND EXTRUDED UNCOOKED BATTER

(84) Etats contractants désignés:
**AT BE CH CY DE DK ES FI FR GB GR IE IT LI LU
MC NL PT SE**

(30) Priorité: **21.09.1998 FR 9811731**

(43) Date de publication de la demande:
**18.07.2001 Bulletin 2001/29**

(73) Titulaire: **LU France
91130 Ris Orangis (FR)**

(72) Inventeurs:
• **CLUET, Denis
F-77260 Sainte-Aulde (FR)**
• **ROCHER, Patrick
F-44120 Vertou (FR)**

(74) Mandataire: **Jacquard, Philippe Jean-Luc et al
Cabinet ORES,
36,rue de St Pétersbourg
75008 Paris (FR)**

(56) Documents cités:
**EP-A- 0 682 875        EP-A- 0 739 593
DE-A- 19 643 206        FR-A- 2 383 771
US-A- 4 529 609         US-A- 4 698 228
US-A- 4 880 653**

• **MERCIER CH. AND CANTARELLI C.: "Pasta and
extrusion cooked foods" 1986 , ELSEVIER ,
LONDON XP002102273 page 175; tableau 1 page
176; tableau 2**

## Description

La présente invention a pour objet un procédé de fabrication d'une bande de pâte crue pétrie et extrudée, à base de farine de blé, et destinée notamment à la fabrication de biscuits secs et de "crackers".

Un procédé industriel classique de fabrication de biscuits secs met en oeuvre un pétrin.pour pétrir la pâte crue et des trains de laminoirs pour obtenir tout d'abord par pré-laminage (ou "pre-sheeting") une bande épaisse qui est transformée par des étapes successives de laminage en une bande de pâte crue.

Cette technique classique de façonnage de bande suppose que la pâte n'adhère pas trop aux laminoirs au cours de son écrasement.

Les formules de pâtes à laminer doivent donc tenir compte de cette contrainte d'adhérence aux outils de laminage, ce qui constitue une limitation à la créativité et à l'innovation dans le domaine des biscuits secs et crackers : des compositions donnant une pâte trop adhérente ne pourront être transformées en biscuits de manière industrielle avec les procédés de laminage classique.

On connaît, par exemple de la demande de Brevet PCT WO 91/14371 (PROCTER and GAMBLE), un procédé qui représente une technique de fabrication d'une bande de pâte crue qui est obtenue par extrusion à froid, mais cette extrusion est réalisée postérieurement au pétrissage, après un temps de repos d'une heure ou plus, et séparément de celui-ci.

Les Brevets US 4,938,127, US 4,949,628, US 4,957,042 et US 4,960,043 (NABISCO) décrivent un procédé de fabrication d'une pâte extrudée qui est au moins partiellement cuite, et ce procédé met en oeuvre deux étages de mélange-extrusion en cascade.

Avant le mélange qui s'accompagne d'un traitement thermique, les ingrédients secs et l'huile sont mélangés vigoureusement et soumis à un traitement thermique, puis extrudés, et l'extrudat ainsi obtenu est à son tour introduit dans le deuxième étage où il est mélangé à du sucre et de l'eau et est à son tour extrudé à chaud à relativement basse pression pour former des pâtons individuels ou "cookies" au moins partiellement cuits à texture friable ("crumb-like"), qui sont ensuite cuits par micro-ondes.

Selon cette technique, le mélange vigoureux accompagné d'un traitement thermique a pour objet de minimiser la séparation de phase de l'huile qui est susceptible de se produire ensuite lors de l'extrusion qui s'accompagne d'une cuisson partielle.

Les Brevets US 4,957,041, US 4,979,434 et US 4,984,514 (NABISCO) décrivent un procédé de fabrication d'une pâte extrudée partiellement cuite dans un extrudeur qui comprend une zone de mise en contact, une zone de mélange et de traitement thermique, une zone de transport rapide et une zone de mélange-extrusion. Une fois effectué un mélange vigoureux accompagné d'un traitement thermique, on ajoute le sucre cristallisé dans la zone de transport ainsi que le complément d'eau et l'ensemble est de nouveau soumis à un mélange avant extrusion. Ce procédé s'apparente donc à celui décrit dans les autres Brevets NABISCO précités, à ceci près qu'il met en oeuvre une machine disposée "en ligne".

Dans tous les cas, les procédés décrits par NABISCO impliquent un premier mélange ou pétrissage vigoureux accompagné d'un traitement thermique pour contrôler le problème de la séparation de l'huile, puis l'addition du reste de l'eau et du sucre cristallisé pour contrôler le croquant du biscuit final, et enfin un deuxième mélange ou pétrissage avant l'extrusion finale.

En conséquence, les procédés décrits par NABISCO permettent d'obtenir une cuisson partielle d'un biscuit croustillant ("crumb-like") par deux opérations de mélange en cascade dont la première s'accompagne d'un traitement thermique et dont la seconde ou les deux est suivie d'une extrusion, l'extrusion qui suit la seconde opération de mélange ayant pour fonction d'obtenir à basse pression la cuisson partielle recherchée.

Les procédés de mélange-extrusion actuellement connus impliquent donc, à l'instar des procédés précités, une cuisson au moins partielle de la pâte. C'est le cas des Brevets des Etats-Unis US 5,417,992 (CORNELL RESEARCH FOUNDATION), US 4,786,514 (WERNER und PFLEIDERER), US 4,590,081 (IKEGAI TEKKO) et US 5,429,835 (WENGER).

Il est également connu du Brevet des Etats-Unis US 5,487,605 (ISMAR), de mélanger des ingrédients de manière à en préserver les qualités, mais ceci implique l'absence de pression. Ce procédé n'est donc pas compatible avec une opération d'extrusion.

Le Brevet US 5,268,187 (QUINLAN) décrit un procédé d'obtention par cuisson-extrusion d'une bande de pâte mince, le procédé d'extrusion mettant en oeuvre un pétrissage préalable et une extrusion à l'aide de trois rouleaux rotatifs. La bande obtenue n'est pas crue.

La présente invention a pour objet un procédé susceptible de se substituer au procédé classique de laminage mentionné ci-dessus, l'idée de base de l'invention étant de réaliser dans un seul appareil le pétrissage de la pâte et son extrusion sous la forme d'une bande de pâte crue et mince.

En particulier, l'épaisseur de la bande est susceptible d'être ajustée, par exemple entre 0,3 mm et 3 mm, voire 5 mm, et sa largeur est susceptible d'atteindre des valeurs du même ordre de grandeur que la largeur des bandes laminées obtenues par le procédé classique.

Sous une forme préférée, l'invention concerne également un procédé permettant d'obtenir directement en sortie de l'extrudeur, une ou plusieurs bandes dont l'épaisseur est choisie à volonté, et en particulier une bande mince apte à la production de biscuits, sans nécessiter d'étape ultérieure de laminage. Ceci permet de simplifier considérablement les installations. Le procédé selon l'invention permet d'obtenir des bandes de pâte crues qui peuvent présenter une épaisseur choisie par exemple entre 0,3 mm et 5 mm.

La pâte obtenue présente des propriétés qui permettent de l'utiliser comme une bande de pâte crue classique pour l'obtention de produits tels que des biscuits secs, des biscuits à pâte sablée, des biscuits à faible teneur en matière grasse, des crackers, etc...

Le calibrage de la bande est obtenu par extrusion à travers une filière, ses caractéristiques d'adhérences sont donc moins une contrainte pour les étapes ultérieures de fabrication, on peut donc réaliser une bande calibrée crue de formulation nouvelle, notamment des formulation produisant des pâtes extrêmement collantes. Les compositions des gâteaux et biscuits que l'on peut dès lors fabriquer sont innovantes, et présentent un avantage compétitif certain.

Le cisaillement est défini pour chaque module du moyen de pétrissage, comme la moyenne des vitesses de déformation de la pâte entre chaque partie de rotor et stator du moyen de pétrissage, selon la formule :

$$\gamma_i = V_i/h_i$$

où V est la vitesse linéaire développée par tout élément du rotor, (v = n*pi*D),

n = vitesse de rotation en radians/seconde
D = distance à l'axe de rotation,
pi = 3.14
et où h est la distance entre le point considéré du rotor et le point considéré du stator.

Les points de stator et rotor correspondants sont pris selon la perpendiculaire aux lignes de flux de la pâte.

L'invention concerne ainsi un procédé d'obtention d'une bande de pâte crue pétrie et extrudée à base de farine de blé, notamment à un débit de 100 à 3500 kg/h de pâte crue, et capable de lever par cuisson au four caractérisé en ce qu'il comporte :

- un pétrissage d'un mélange de ladite pâte crue à base de farine de blé dans une zone de pétrissage d'un mélangeur-extrudeur, avec un cisaillement compris entre 10 s$^{-1}$ et 150 s$^{-1}$, à une température comprise entre 10° et 45° C.
- une mise en pression du mélange pétri, dans une zone d'alimentation de filière du mélangeur-extrudeur, avec une pression comprise entre 1 et 350 bars, en particulier entre 1 et 70 bars ou bien encore entre 10 et 350 bars, et plus particulièrement entre 50 et 350 bars, le cisaillement dans la zone d'alimentation de filière étant compris entre 10 et 150 s$^{-1}$, et de préférence entre 10 et 60s$^{-1}$,
- une extrusion du mélange pétri, mis en pression, à travers une filière alimentée par la zone d'alimentation de filière.

Le moyen de pétrissage continu et de mise en pression peut être avantageusement un mélangeur bi-vis corotatives, contenues dans un fourreau, l'ensemble étant communément appelé extrudeur bi-vis.

Par exemple, les équipements ZPM de Werner & Pfeiderer ou BC de Clextral ou tout autre équipement semblable peuvent être adaptés de manière à être dotés de modules de vis adaptés disposés dans l'ordre adéquat, pour assurer les fonctions requises aux opérations de mélange, pétrissage, mise en pression dans les conditions spécifiées de la présente invention.

La température de la bande de pâte crue en sortie de filière d'extrusion est avantageusement comprise entre 15°C et 45°C et de préférence entre 18°C et 30°C. Ceci peut être obtenu en refroidissant les fourreaux et/ou les arbres de l'extrudeur avec un fluide frigorifique recyclé entre environ -10°C et -5°C, pour obtenir un maximum d'échange thermique entre la pâte et le fluide.

Le procédé selon l'invention permet de réduire notablement les coûts d'investissement d'une ligne de fabrication, puisque le pétrissage et l'extrusion de la pâte crue sont réalisables en continu dans un même dispositif, le mélangeur-extrudeur, avec par exemple un dosage dynamique des ingrédients. Il permet également d'atteindre des finesses de bande qu'on ne peut pas obtenir par laminage classique d'une bande crue en raison du collant de la pâte aux laminoirs. Cette finesse de bande, qui permet d'éviter tout laminage ultérieur, permet également de réaliser par superposition de bandes de pâte crue des biscuits multicouches avec interposition entre les bandes d'un fourrage présentant une viscosité éventuellement différente de celle des bandes de pâte crue.

Le pétrissage présente avantageusement une durée de l'ordre de 50s à 600s, et de préférence de l'ordre de 150s. La zone de pétrissage peut comporter avantageusement des cames à excentriques et/ou des vis contre-rotatives conjuguées.

La durée de passage de la pâte dans la zone d'alimentation de filière est de préférence de l'ordre de 10 à 120s. Cette zone d'alimentation de filière peut avantageusement comporter des éléments de vis conjugués du type à cisaillement limité, ou bien de préférence une pompe à engrenages.

L'énergie spécifique mécanique dissipée est avantageusement comprise entre 10 et 50 J/g et plus particulièrement entre 20 et 50 J/g. Ceci permet en particulier de contrôler facilement l'échauffement des pâtes traitées en le compensant par un refroidissement du fourneau et/ou des vis de sorte que la température de la pâte ne dépasse pas 45°C, ce qui permet aux poudres levantes, bicarbonate d'amonium notamment, de ne pas se dissocier avant l'entrée en four de cuisson. On rappellera que l'énergie spécifique mécanique est la somme des énergies mécaniques ramenée à la masse de pâte traitée : énergie de pétrissage, de mise en pression, de perte de charge dans la filière.

Avant le pétrissage, il est avantageux de prévoir un dosage en continu des différents composants de la pâte : farines ou mélanges de poudres, liquides (sirops, matières grasses fondues ou plastifiées, eau, arômes), retour de rognures, et/ou un transport des ingrédients dans une zone de transport du mélangeur-extrudeur, depuis une entrée d'ingrédients du mélangeur-extrudeur, jusqu'à la zone de pétrissage, avec un cisaillement qui peut être par exemple compris entre environ 10 et 50s$^{-1}$ et de préférence entre 20 et 50 s$^{-1}$.

La durée de passage des ingrédients dans la zone de transport est avantageusement de l'ordre de 10 à 30s, et de préférence de l'ordre de 15s.

Le procédé peut comporter avantageusement une mise en pression dans une zone de mise en pression située entre la zone de pétrissage et la zone d'alimentation de filière, de manière à maintenir en pression la pâte mélangée dans la zone de pétrissage, par exemple entre 5 et 70 bars. La zone de mise en pression peut présenter des vis à pas inversé partiellement découpées de manière à assurer un débit de fuite vers l'aval, c'est-à-dire vers la zone d'alimentation de filière..

Le procédé comporte de préférence un refroidissement des vis et/ou des fourreaux à une température interne des fourreaux et/ou des vis avantageusement comprise entre -5°C et +5°C. Ceci permet d'évacuer efficacement au moins une partie de la chaleur due au cisaillement de la pâte et donc, soit d'utiliser des taux de cisaillement sensiblement plus élevés, soit d'augmenter la durée notamment de pétrissage et/ou d'extrusion. Le refroidissement est réalisé à l'aide d'eau froide ou d'un liquide réfrigérant, et de préférence à contre-courant du passage de la pâte.

Le. refroidissement est avantageusement assuré dans au moins la moitié de la longueur des zones de pétrissage et d'alimentation de la filière, et dans le cas du refroidissement des fourreaux, il est de préférence réalisé séparément pour chaque fourreau.

Selon une première variante., le procédé met en oeuvre un mélange simultané de tous les ingrédients en amont de la zone de pétrissage.

Selon une deuxième variante, le procédé met en oeuvre avant pétrissage, dans un premier temps un pré-mélange d'ingrédients pulvérulents et d'au moins une matière grasse liquide et/ou fondue, puis l'addition d'eau dans un deuxième temps. Cette variante permet de modifier la rhéologie de la pâte et la texture des produits finis.

Selon une troisième variante qui convient en particulier pour une pâte crue pour biscuit dit à faible teneur en matières grasses, il met en oeuvre avant pétrissage, dans un premier temps un pré-mélange d'ingrédients pulvérulents avec de l'eau et éventuellement au moins un sirop, et dans un deuxième temps, l'addition d'au moins une matière grasse liquide et/ou fondue.

Le procédé peut comporter, pour une pâte crue pour biscuit, une composition pondérale de :

- 40% à 70% de farine de blé
- 0% à 20% de matière grasse
- 0% à 30% et de préférence 14% à 20% de sucre sous forme solide ou sous forme d'au moins un sirop
- 2% à 30% d'eau ajoutée y compris la teneur en eau du (ou des) sirop(s) éventuellement présent(s)
- au moins un élément de levage (BCA 0%-1% et/ou BCS avec acide : 0%-2%)
- 0% à 8% d'amidon natif
- 0% à 2% de sel
- 0% à 5% de broyat de biscuits recyclés
- 0% à 1% d'au moins un émulsifiant, par exemple lécithine de soja
- 0% à 0,5% d'au moins un correcteur d'acidité basique (phosphate monocalcique, pyrophosphate, etc.)
- 0% à 5% de poudre de lait,
- 0 à 40% d'autres protéines (ceufs, protéines végétales ou animales),
- éventuellement d'autres additifs, tels que des arômes, des agents réducteurs et/ou des enzymes.

L'élément de levage peut comporter 0,2% à 0,4% de bicarbonate d'ammonium et/ou de sodium.

L'invention concerne également un mélangeur-extrudeur, par exemple un extrudeur formant un pétrin continu, pour la mise en oeuvre du procédé ci-dessus, lequel comporte une zone de pétrissage avec un cisaillement compris entre 10 s$^{-1}$ et 150 s$^{-1}$, et une zone d'alimentation de filière présentant une fente dont l'épaisseur e est réglable sur toute la largeur de la fente pour alimenter à une pression comprise entre 1 et 350 bars une filière rectangulaire, le cisaillement dans la zone d'alimentation de filière étant compris entre 10 s$^{-1}$ et 150 s$^{-1}$ et de préférence entre 10 s$^{-1}$ et 60 s$^{-1}$.

Selon les types de pâte, l'épaisseur souhaitée de la bande de pâte extrudée et sa vitesse de défilement, la pression nécessaire à l'extrusion dans la filière peut atteindre des valeurs importantes (50 à 350 bars).

La mise en pression pour l'alimentation de la filière est alors avantageusement réalisée par une pompe à engrenages, alimentée par la zone de pétrissage sous une pression de 0,5 à 20 bars, et de préférence 2 bars, et qui refoule la pâte dans la zone de filière de façon régulière, créant ainsi la pression nécessaire à l'écoulement de la pâte dans la filière d'extrusion. Cette pression peut être comprise entre 10 et 350 bars et plus particulièrement entre 50 et 350 bars.

Ce type de pompe permet donc de limiter notablement l'énergie spécifique mécanique de mise en pression de la pâte, et donc de minimiser l'échauffement de la pâte crue. Elle permet aussi de réduire la pression demandée en fin de zone de pétrissage, et donc de limiter l'échauffement, ainsi que le cisaillement imprimé à la pâte en amont de la filière pour la mise en pression du mélange pétri, qui peut être alors de l'ordre de 10 à 60 s$^{-1}$.

Elle permet également d'atteindre des pressions sur la filière d'extrusion de l'ordre de 350 bars à des températures compatibles avec les applications de calibrage de bande de pâte biscuitière crue (20° à 45° C).

Les cisaillements imprimés à pâte lors de son passage dans la pompe à engrenage varient de 10 à 60 s$^{-1}$ selon les vitesses de rotation de la pompe à engrenages.

La filière rectangulaire qui présente une hauteur de passage e réglable, la hauteur étant la dimension prise dans le sens de l'épaisseur de la bande de pâte extrudée, est alimentée en son centre par la zone d'alimentation de filière de l'extrudeur, constituée par exemple par une pompe à engrenages et elle présente avantageusement une chambre de diffusion de pression disposée en amont de la filière rectangulaire de passage de pâte, qui présente par exemple une fente fine de longueur variable, cette longueur étant plus importante vers le centre que sur les bords, afin de répartir le flux d'extrudat pour obtenir une bande extrudée homogène et d'épaisseur constante.

Selon un mode de réalisation préféré, l'épaisseur de la fente rectangulaire est réglable à l'aide d'une lèvre flexible dont la position est déterminée par un organe de réglage. Le réglage peut être automatisé par couplage à un capteur d'épaisseur de bande.

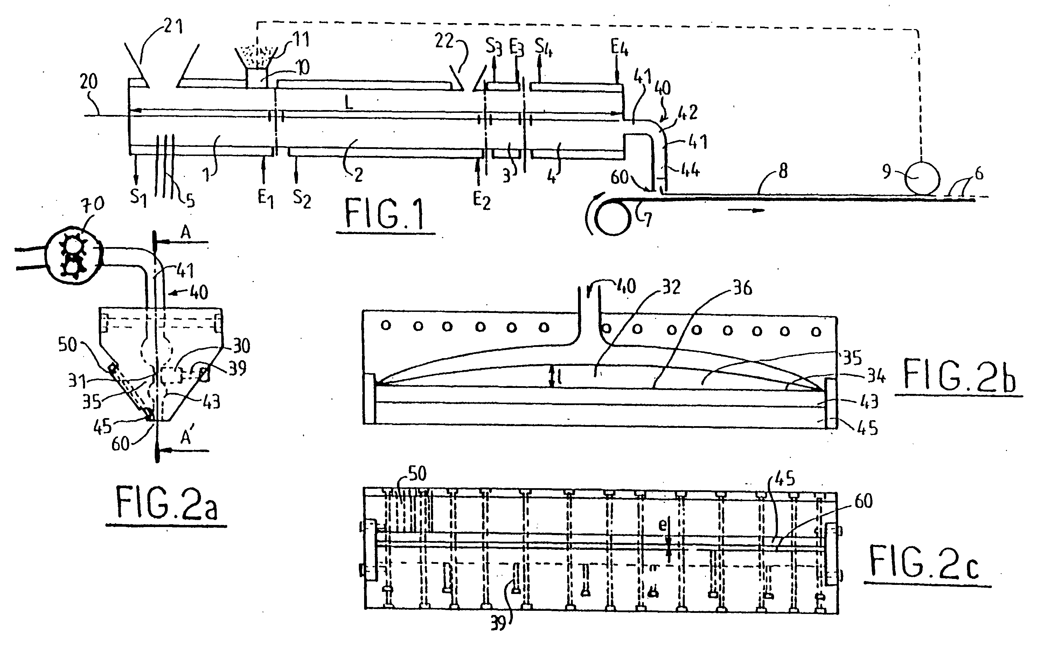

D'autres caractéristiques et avantages de l'invention apparaîtront mieux à la lecture de la description qui va suivre, donnée à titre non limitatif, en liaison avec la figure 1 ci-annexée, qui représente un mode de réalisation préféré d'un mélangeur-extrudeur selon l'invention, les figures 2a à 2c représentant des détails de la tête d'extrusion du mélangeur-extrudeur de la figure 1, respectivement en coupe transversale, en coupe AA et en vue de dessous.

Les produits pulvérulents sont généralement prémélangés de manière dynamique dans un doseur, de préférence un doseur massique, en amont du mélangeur-extrudeur. Le cas échéant, les matières grasses sont prémélangées également entre elles de manière continue à l'état liquide ou fondu.

Les cisaillements y mentionnés sont calculés (voir plus haut) comme une moyenne du cisaillement imprimé à la pâte pour chaque zone, en négligeant les cisaillements liés aux écoulements de fuite, et les cisaillements entre deux vis co-rotatives.

On calcule le cisaillement dans le chenal de la vis comme la déformation de la pâte entre la racine de vis et fourreau d'extrudeur, selon la formule :

$$\gamma = v/h$$

où v est la vitesse linéaire développée par la racine de la vis (v = n*pi*D),
n = vitesse de rotation en radians/seconde
D = diamètre de racine de vis,
pi = 3.14
et où h est la distance entre la racine de vis et le fourreau d'extrudeur.

Le dispositif mélangeur-extrudeur représenté à la figure 1 comporte un double arbre principal 20 à double vis équipé de systèmes de vis qui définissent les différentes zones fonctionnelles, ici au nombre de 4, à savoir :

- une zone 1 de transport occupant par exemple 25% de la longueur L de l'arbre double et qui est équipée de deux vis co-rotatives conjuguées procurant un cisaillement de l'ordre de 10 s$^{-1}$ à 100 s$^{-1}$ et de préférence entre 20 s$^{-1}$ et 50 s$^{-1}$. Le temps de transport peut être de l'ordre de 10 s à 30 s.
- une zone 2 de pétrissage (ou malaxage) occupant par exemple 40% à 70% de la longueur L de l'arbre double, et qui est équipée de cames à excentriques procurant un cisaillement de l'ordre de 10 s$^{-1}$ à 150 s$^{-1}$. Le temps de

pétrissage est de l'ordre de 60 à 180 s.

L'ajout, éventuellement effectué dans un deuxième temps, d'eau, ou de matières grasses selon le cas, est réalisé à la fin de la deuxième zone.

- une zone 3 de mise en pression qui présente deux vis à pas inversé pouvant être partiellement découpées pour procurer un débit de fuite vers l'aval. Cette zone de mise en pression permet de maintenir, une pression suffisante dans la zone de pétrissage, de manière à assurer que celle-ci reste bien remplie. Cette zone de mise en pression occupe par exemple 10% de la longueur L.
- une zone 4 d'alimentation de la filière d'extrusion 40, les zones 3 et 4 occupant par exemple 25% de la longueur L. Elle permet d'assurer une mise en pression entre 5 et 70 bars de la partie amont de la filière 40, constituée par un chenal d'alimentation 41, grâce à des éléments de vis conjugués et à cisaillement limité.

Une pompe à engrenages 70 (figure 2a) peut être utilisée comme moyen de mise en pression de la pâte dans la filière, lorsque la pression nécessaire à l'écoulement de la pâte dans la filière dépasse 10 bars. Elle peut alors atteindre des pressions de l'ordre de 350 bars.

La pression nécessaire est une fonction croissante de la viscosité de la pâte qui, pour des matières premières données, dépend principalement de son humidité et de son taux de matières grasses.

Il est avantageux de disposer en amont de la sortie de la filière 40, un diffuseur de pression 31, par exemple un rétrécissement de passage, qui permet la maintien d'une pression minimale même si la bande extrudée est épaisse. En outre, le diffuseur de pression 31 est de préférence adapté à reporter le flux de pâte sur toute la largeur du chenal 43 d'alimentation de la fente d'extrusion 41 pour obtenir une bande de pâte crue extrudée 8 d'épaisseur homogène. Le diffuseur 31 comporte à cet effet, comme représenté à la fig.2b, une longueur de passage 1 (prise dans le sens de défilement de la pâte) qui est plus importante au centre 32 que sur les bords 34 de la filière.

En aval du chenal 43, qui présente une section de passage évasée par rapport au diffuseur de pression 31, la filière 40 comporte une fente 60 dont l'épaisseur e est sensiblement constante sur toute la largeur de la bande 8, et qui est réglable à l'aide d'une pièce mobile 45 (Fig. 2a et 2c) ajustée par des vis 50. Cette pièce mobile 45 peut être souple de façon à pouvoir ajuster zone par zone sur la largeur de la fente 60, l'épaisseur de la fente 60, de façon à régler en tant que de besoin les vitesses et les épaisseurs de sortie, pour obtenir une bande d'épaisseur et de vitesse de sortie constante à travers la fente 60. De la sorte, on obtient après extrusion une bande 8 d'épaisseur constante et homogène sur le tapis 7.

Le chenal d'alimentation 41 de la filière 40 peut être coudé (en 42), de manière à permettre à la bande de pâte crue de tomber verticalement de la section verticale 44 au niveau de la fente 60 qui débouche au voisinage du tapis d'entraînement 7. Ceci permet d'éviter des problèmes de cohésion de la pâte. En pratique, la fente 60 de la filière 40 est dans ce cas positionnée à une distance du tapis 7 qui est de l'ordre de 2 à 3 cm.

Le diffuseur de pression se présente préférentiellement sous la forme d'une chambre de profilage délimitant une fente rectangulaire 31 située dans l'axe de la fente 60 et dont la longueur L est plus importante au centre 32 que sur les bords 34. Ce diffuseur de pression est par exemple constitué (voir Fig. 2a) par une surépaisseur fixe 35 délimitant un bord rectiligne 36 de la fente 31, le bord opposé de celle-ci étant délimité par une autre surépaisseur 30 fixe ou mobile, éventuellement réglable par un élément de réglage tel que des vis 39 (Fig.2a et 2c) permettant de modifier l'épaisseur de la fente rectangulaire 31 en faisant varier son épaisseur moyenne $e_m$. Cette technologie est connue en soi dans le domaine des filières pour matières plastiques.

Le refroidissement des fourreaux s'effectue de préférence zone par zone (cf l'entrée $E_1$ et la sortie $S_1$ pour la zone 1, l'entrée $E_2$ et la sortie $S_2$ pour la zone 2 et ainsi de suite). Le refroidissement des arbres de l'extrudeur est particulièrement avantageux, car il permet de refroidir là où se produit le cisaillement, en profitant de l'effet d'ailette procuré par les vis.

Exemple 1

Cet exemple correspond à la préparation d'une bande de pâte sablée crue extrudée, de composition pondérale suivante :

| Ingrédients secs : | | |
|---|---|---|
| Farine de blé | 61 % | (50%-63%) |
| Sucre sous forme solide | 14 % | (12%-33%) |
| Sel | 0,3 % | |
| Bicarbonate de sodium | 0,3 % | (0%-0,4%) |
| Bicarbonate d'ammonium | 0,3 % | (0%-0,4%) |

(suite)

| Ingrédients secs : | | |
|---|---|---|
| Matière grasse | 15 % | (10%-20%) |
| Autres additifs tels que des arômes | 0,1 % | (0%-1%) |
| Autres ingrédients : | | |
| Eau ajoutée y compris la teneur en eau du ou des sirops éventuellement présents | 7 % | (1%-8%) |
| Sirop de glucose | 2 % | (0%-4%) |
| | 100 % | |

Les valeurs données entre parenthèses correspondent à une formule générale convenant pour fabriquer des biscuits secs grâce au procédé selon l'invention.

On introduit les ingrédients secs (sous forme pulvérulente) par une trémie à l'entrée de la zone de transport. L'huile et le sirop de glucose sont amenés également dans la zone de transport. Pour cet exemple, l'eau et le sirop de glucose sont ajoutés à la fin de la zone de pétrissage. La quantité d'eau ajoutée et l'eau contenue dans le sirop de glucose est suffisante pour que, dans la zone d'alimentation de la filière d'extrusion, l'eau vienne mouiller les particules de farine en vue de l'obtention d'un biscuit sablé.

Le temps de transport est d'environ 15 s, le temps de pétrissage est d'environ 100 s, et le temps de passage dans la zone d'alimentation de la filière est d'environ 40 s. La température de la bande de pâte crue en sortie de filière est de sensiblement 25°C, et son épaisseur est de 0,5 mm à 3 mm.

Exemple 2

Cet exemple correspond à la préparation d'une bande de pâte crue extrudée, pour biscuit sec, de composition pondérale suivante :

| Ingrédients secs : | | |
|---|---|---|
| Farine de blé | 57 % | (55%-70%) |
| Sucre sous forme solide | 17 % | (17%-22%) |
| Sel | 0,3 % | |
| Bicarbonate d'ammonium | 0,6 % | (0,5%-1%) |
| Bicarbonate de sodium | 0,4 % | (0%-0,5%) |
| Phosphate Monocalcique | 0,4 % | (0,3%-0,5%) |
| Lait entier en poudre | 0,8 % | (0%-4%) |
| Lécithium de soja | 0,2 % | (0,1%-0,8%) |
| Autres additifs tels qu'arômes, correcteurs d'acidité, enzymes, agents réducteurs | 0,1 % | (0%-1%) |
| Autres ingrédients : | | |
| Eau ajoutée y compris la teneur en eau (2,2%) du ou des sirops éventuellement présents | 10 % | (9%-20%) |
| Matière grasse (Huile) | 9,2 % | (6,5%-16%) |
| Sirop de glucose | 4 % | (2%-5%) |
| | 100 % | |

Les valeurs données entre parenthèses correspondent à une formule générale convenant pour fabriquer des biscuits secs grâce au procédé selon l'invention.

On introduit l'ensemble des ingrédients dans la zone de transport par dosage dynamique. Le temps de transport est d'environ 15 s, le temps de pétrissage est d'environ 100 s, et le temps de passage dans la zone d'alimentation de la filière est de l'ordre de 40 s, à une pression de 130 bars, et la température de la bande de pâte crue extrudée est, en sortie de filière, d'environ 25°C, et son épaisseur est de 0,5 mm à 1,7 mm.

Alternativement, on introduit dans la zone de transport l'ensemble des ingrédients sauf la ou les matières grasses et le sirop de sucre. La ou les matières grasses et le sirop de sucre sont introduits à la fin du pétrissage, vers la sortie de la zone de pétrissage.

Exemple 3

Cet exemple correspond à la préparation d'une bande de pâte crue extrudée, pour biscuits secs à faible teneur en matière grasse, de composition pondérale suivante :

| Ingrédients secs : | | |
|---|---|---|
| Farine de blé | 55 % | (53%-60%) |
| Amidon de blé | 6 % | (5%-8%) |
| Sucre sous forme solide | 17 % | (15%-22%) |
| Sel | 0,4 % | (0,3%-0,6%) |
| Bicarbonate d'ammonium | 0,8 % | (0,5%-1%) |
| Bicarbonate de sodium | 0,4 % | (0,3%-0,6%) |
| Phosphate Monocalcique | 0,4 % % | (0,3%-0,7%) |
| Lactosérum poudre | 4,8 % | (3%-6%) |
| Autres additifs tels qu'arômes, correcteurs d'acidité, enzymes, agents réducteurs | 0,1 % | (0%-1%) |
| Autres ingrédients : | | |
| Eau ajoutée y compris la teneur en eau du ou des sirops éventuellement présents | 11 % | (10%-20%) |
| Matière grasse (Huile) | 3,5 % | (2%-5%) |
| Sirop de glucose | 0 % | (0%-5%) |
| Emulsifiant | 0,6 % | (0,5%-1%) |
| | $\overline{100\ \%}$ | |

On introduit l'ensemble des ingrédients dans la zone de transport, ou bien on introduit l'ensemble des ingrédients sauf l'huile dans la zone de transport, et on introduit l'huile en fin de pétrissage vers la sortie de la zone de pétrissage.

Le temps de transport est d'environ 100 s, le temps de pétrissage est d'environ 40 s, et le temps de passage dans la zone d'alimentation de la filière est de l'ordre de 40 s. La pâte pétrie en fin de zone d'alimentation de filière est poussée dans la zone de filière par exemple par une pompe à engrenages type MAAG EX 140, à une pression de 300 bars, et la température de la bande en sortie d'extrusion est d'environ 35°C. Les vitesses d'extrusion (par exemple 10 à 40 mètres par minute) sont compatibles avec les vitesses de défilement des bandes de pâte laminées sur les installations conventionnelles en biscuiterie.

Après extrusion, et comme représenté à la fig.1, la bande de pâte crue est transportée par un tapis en vue de traitements ultérieurs tels que rotodécoupe, cuisson, etc...

A la fig.1, on a représenté un rotodécoupoir 9 qui est susceptible de produire entre 0% et 40% de rognures selon la géométrie du produit final.

Un des avantages du procédé selon l'invention est de permettre un recyclage en continu des rognures.

Les rognures sont à cet effet réintroduites au début de la zone de transport gravitairement, ou à l'entrée de la zone de pétrissage à l'aide d'une pompe multilobes, par exemple disposée au fond d'une trémie de réception des rognures, dont le débit nominal est nettement supérieur au débit des rognures, de manière à permettre un bon compactage, sans introduire d'échauffement de la pâte crue recyclée, le débit de la pompe multilobes étant en pratique plusieurs fois supérieur, par exemple 5 fois supérieur, à celui du débit des rognures.

Le procédé selon l'invention permet d'obtenir un produit plus isotrope qui présente moins de rétraint qu'un produit laminé et une meilleure recouvrance élastique, ainsi qu'un meilleur calibrage de l'épaisseur du produit.

**Revendications**

1. Procédé d'obtention d'une bande de pâte à biscuit crue pétrie et extrudée à base de farine de blé **caractérisé en ce qu'**il comporte :

   - un pétrissage d'un mélange de ladite pâte crue à base de farine de blé dans une zone de pétrissage d'un mélangeur-extrudeur, avec un cisaillement compris entre 10 s$^{-1}$ et 150 s$^{-1}$, à une température comprise entre 10 et 45° C,
   - une mise en pression du mélange pétri, dans une zone d'alimentation de filière du mélangeur-extrudeur, avec une pression comprise entre 1 et 350 bars, le cisaillement dans la zone d'alimentation de filière étant compris entre 10 et 150 s$^{-1}$ et de préférence entre 10 et 60 s$^{-1}$,
- une extrusion du mélange pétri et mis en pression, à travers une filière alimentée par la zone d'alimentation de filière.

**2.** Procédé selon la revendication 1 **caractérisé en ce que** le pétrissage présente une durée de 50 à 600 s et de préférence de l'ordre de 150 s.

**3.** Procédé selon une des revendications 1 ou 2 **caractérisé en ce que** la zone de pétrissage comporte des cames à excentriques, éventuellement maintenues remplies par des vis à pas inverse.

**4.** Procédé selon une des revendications 1 ou 3 **caractérisé en ce que** la durée du passage de la pâte dans la zone d'alimentation de filière est de l'ordre de 10 à 120 s.

**5.** Procédé selon une des revendications précédentes **caractérisé en ce que** la zone d'alimentation de filière présente des éléments de vis conjugués du type à cisaillement limité.

**6.** Procédé selon une des revendications 1 à 4, **caractérisé en ce que** la mise en pression est réalisée par une pompe à engrenage, alimentée par la zone de pétrissage sous une pression de 0,5 à 20 bars et de préférence 2 bars, la pompe refoulant la pâte dans la filière pour générer une pression d'écoulement de la pâte dans la filière d'extrusion, comprise entre 10 et 350 bars, et plus particulièrement entre 50 et 350 bars.

**7.** Procédé selon une des revendications précédentes **caractérisé en ce que** la température de la bande en sortie d'extrusion est comprise entre 18°C et 45°C.

**8.** Procédé selon une des revendications précédentes, **caractérisé en ce que** l'énergie spécifique mécanique dissipée dans la pâte est comprise entre 10 J/g à 50 J/g.

**9.** Procédé selon une des revendications précédentes **caractérisé en ce qu'**il comporte, avant le pétrissage, un transport des ingrédients dans une zone de transport du mélangeur-extrudeur, depuis une entrée d'ingrédients du mélangeur-extrudeur, jusqu'à la zone de pétrissage, avec un cisaillement compris entre 10 s$^{-1}$ à 50 s$^{-1}$, et de préférence entre 20 s$^{-1}$ et 50 s$^{-1}$.

**10.** Procédé selon la revendication 9 **caractérisé en ce que** la zone de transport comporte des vis contra-rotatives conjuguées.

**11.** Procédé selon la revendication 10 **caractérisé en ce que** la durée de passage des ingrédients dans la zone de transport est de l'ordre de 10 s à 20 s.

**12.** Procédé selon une des revendications précédentes **caractérisé en ce qu'**il comporte une mise en pression dans une zone de mise en pression située entre la zone de mélange et la zone d'extrusion.

**13.** Procédé selon la revendication 12 **caractérisé en ce que** la zone de mise en pression présente des vis à pas inversé partiellement découpées de manière à assurer un débit de fuite vers l'aval.

**14.** Procédé selon une des revendications précédentes **caractérisé en ce qu'**il comporte un refroidissement des fourreaux d'au moins une zone et/ou des arbres de l'extrudeur à une température interne des fourreaux et/ou des vis comprise entre -15°C et +5°C.

**15.** Procédé selon la revendication 14 **caractérisé en ce qu'**il comporte un refroidissement d'au moins deux zones; qui est réalisé séparément pour chaque zone, ou en série, notamment à contre-courant.

**16.** Procédé selon une des revendications précédentes **caractérisé en ce qu'**il met en oeuvre un mélange de tous les ingrédients en amont de la zone de pétrissage.

**17.** Procédé selon une des revendications 1 à 15 **caractérisé en ce qu'**il met en oeuvre avant pétrissage, dans un premier temps, un pré-mélange d'ingrédients pulvérulents et d'au moins une matière grasse liquide et/ou fondue, puis l'addition d'eau dans un deuxième temps.

**18.** Procédé selon une des revendications 1 à 15 **caractérisé en ce qu'**il met en oeuvre, avant pétrissage, dans un premier temps un pré-mélange d'ingrédients pulvérulents avec de l'eau et éventuellement au moins un sirop, et dans un deuxième temps l'addition de matière grasse.

**19.** Procédé selon une des revendications précédentes **caractérisé en ce qu'**il comporte, pour une pâte crue pour biscuits, une composition pondérale de :

- 40% à 70% de farine de blé
- 0% à 20% de matière grasse
- 0% à 25% et de préférence 14% à 20% de sucre sous forme solide ou sous forme d'au moins un sirop
- 2% à 30% d'eau ajoutée y compris la teneur en eau du (ou des) sirop(s) éventuellement présents(s)
- au moins un élément de levage
- 0% à 8% d'amidon natif
- 0% à 2% de sel
- 0% à 5% de broyat de biscuits recyclés
- 0% à 0,1% d'au moins un émulsifiant, par exemple lécithine de soja
- 0% à 0,5% d'au moins un correcteur d'acidité (phosphate monocalcique, pyrophosphate, etc.)
- 0% à 5% de poudre de lait
- 0 % à 40 % d'autres sources de protéines (oeufs, protéines végétales, animales),
- éventuellement d'autres additifs, tels que des arômes, des agents réducteurs et/ou des enzymes.

**20.** Procédé selon la revendication 19 **caractérisé en ce qu'**un élément de levage comporte 0,2% à 0,8% de poudre à lever, ou bien 0,2% à 0,4% de bicarbonate d'ammonium et/ou de sodium.

**21.** Procédé selon une des revendications 1 à 18, **caractérisé en ce qu'**il comporte, pour une pâte sablée crue extrudée une composition pondérale de :

| Ingrédients secs : | |
|---|---|
| Farine de blé | 50%-63% |
| Sucre sous forme solide | 12%-33% |
| Sel de l'ordre de | 0,3% |
| Bicarbonate de sodium | 0%-0,4% |
| Bicarbonate d'ammonium | 0%-0,4% |
| Matière grasse | 10%-20% |
| Autres additifs tels que des arômes | 0%-1% |
| Autres ingrédients : | |
| Eau ajoutée y compris la teneur en eau du ou des sirops éventuellement présents | 1%-8% |
| Sirop de glucose | 0%-4% |

**22.** Procédé selon la revendication 18, **caractérisé en ce qu'**il comporte pour une bande de pâte crue extrudée, pour biscuit sec, une composition pondérale suivante :

| Ingrédients secs : | |
|---|---|
| Farine de blé | 55%-70% |
| Sucre sous forme solide | 17%-22% |
| Sel de l'ordre de | 0,3% |
| Bicarbonate d'ammonium | 0,5%-1% |
| Bicarbonate de sodium | 0%-0,5% |
| Phosphate Monocalcique | 0,3%-0,5% |
| Lait entier en poudre | 0%-4% |
| Lécithium de soja | 0,1%-0,8% |
| Autres additifs tels qu'arômes, correcteurs d'acidité, enzymes, agents réducteurs | 0%-1% |

(suite)

| Autres ingrédients : | |
| --- | --- |
| Eau ajoutée y compris la teneur en eau du ou des sirops éventuellement présents | 9%-20% |
| Matière grasse (Huile) | 6,5%-16% |
| Sirop de glucose | 2%-5% |

**23.** Procédé selon les revendications 1 à 18, **caractérisé en ce qu'**il comporte pour une bande de pâte crue extrudée, pour biscuits secs à faible teneur en matière grasse, une composition pondérale suivante :

| Ingrédients secs : | |
| --- | --- |
| Farine de blé | 53%-60% |
| Amidon de blé | 5%-8% |
| Sucre sous forme solide | 15%-22% |
| Sel | 0,3%-0,6% |
| Bicarbonate d'ammonium | 0,5%-1% |
| Bicarbonate de sodium | 0,3%-0,6% |
| Phosphate Monocalcique | 0,3%-0,7% |
| Lactosérum poudre | 3%-6% |
| Autres additifs tels qu'arômes, correcteurs d'acidité, enzymes, agents réducteurs | 0%-1% |
| Autres ingrédients : | |
| Eau ajoutée y compris la teneur en eau du ou des sirops éventuellement présents | 10%-20% |
| Matière grasse (Huile) | 0%-2% |
| Sirop de glucose | 0%-5% |
| Emulsifiant | 0,5%-1% |

**24.** Dispositif pour la mise en oeuvre du procédé selon une des revendications précédentes **caractérisé en ce qu'**il comporte :

- une zone de pétrissage avec un cisaillement compris entre 10 s$^{-1}$ et 150 s$^{-1}$
- une zone d'alimentation de filière pour alimenter à une pression comprise entre 1 et 350 bars une filière rectangulaire, présentant une fente (60) dont l'épaisseur $e$ est réglable sur toute la largeur de la fente, le cisaillement dans la zone d'alimentation de filière étant compris entre 10 s$^{-1}$ et 150 s$^{-1}$, et de préférence entre 10 s$^{-1}$ et 60 s$^{-1}$.

**25.** Dispositif selon la revendication 24, **caractérisé en ce que** la zone d'alimentation de filière comporte une pompe à engrenages située en aval de la zone de pétrissage, et alimentée par elle à une pression comprise entre 0,5 et 20 bars, située aussi juste en amont de la filière d'extrusion, qu'elle alimente en pâte à extruder à la pression nécessaire à l'écoulement de la pâte dans la filière, soit une pression comprise entre 10 et 350 bars et en particulier comprise entre 50 et 350 bars.

**26.** Dispositif selon une des revendications 24 ou 25 **caractérisé en ce qu'**il comporte une chambre de profilage disposée en amont de la filière rectangulaire.

**27.** Dispositif selon la revendication 26 **caractérisé en ce que** la chambre de profilage comporte une fente rectangulaire (31) dont la longueur (L) est plus importante au centre (32) que sur les bords (34).

**Patentansprüche**

**1.** Verfahren zur Herstellung eines Bandes aus rohem, geknetetem und extrudiertem Biskuit-Teig (bzw. Teig für Kekse; pâte à biscuit) auf der Basis von Weizenmehl, **dadurch gekennzeichnet, dass** es umfasst:

- Kneten einer Mischung des rohen Teigs auf der Basis von Weizenmehl in einer Knetzone eines Mischextruders mit einer Scherung zwischen 10 s$^{-1}$ und 150 s$^{-1}$ bei einer Temperatur zwischen 10 und 45°C;

- Unter-Druck-setzen der gekneteten Mischung in einer Einspeisungszone für die Düse des Mischextruders mit einem Druck zwischen 1 und 350 bar, wobei die Scherung in der Einspeisungszone der Düse zwischen 10 und 150 s$^{-1}$ und vorzugsweise zwischen 10 und 60 s$^{-1}$ liegt;

- ein Extrudieren der gekneteten und unter Druck gesetzten Mischung durch eine Düse, die durch die Einspeisungszone der Düse gespeist wird.

2. Verfahren nach Anspruch 1, **dadurch gekennzeichnet, dass** das Kneten eine Dauer von 50 bis 600 s und vorzugsweise in der Größenordnung von 150 s aufweist.

3. Verfahren nach Anspruch 1 oder Anspruch 2, **dadurch gekennzeichnet, dass** die Knetzone exzentrische Nocken umfasst, die gegebenenfalls durch gegenlaufende Schnecken gefüllt gehalten werden.

4. Verfahren nach Anspruch 1 oder 3, **dadurch gekennzeichnet, dass** die Dauer der Passage des Teigs durch die Einspeisungszone der Düse in der Größenordnung von 10 bis 120 s liegt.

5. Verfahren nach einem der vorangehenden Ansprüche, **dadurch gekennzeichnet, dass** die Einspeisungszone der Düse gekoppelte Schneckenelemente des Typs mit begrenzter Scherung aufweist.

6. Verfahren nach einem der Ansprüche 1 bis 4, **dadurch gekennzeichnet, dass** das Unter-Druck-setzen durch eine Zahnradpumpe, welche durch die Knetzone gespeist wird, unter einem Druck von 0,5 bis 20 bar und vorzugsweise 2 bar erfolgt, wobei die Pumpe den Teig in die Düse befördert, um einen Ablaufdruck des Teigs in der Extrudierdüse zu erzeugen, der zwischen 10 und 350 bar und insbesondere zwischen 50 und 350 bar liegt.

7. Verfahren nach einem der vorangehenden Ansprüche, **dadurch gekennzeichnet, dass** die Temperatur des Bandes am Ende des Extrudierens zwischen 18°C und 45°C liegt.

8. Verfahren nach einem der vorangehenden Ansprüche, **dadurch gekennzeichnet, dass** die spezifische mechanische Energie, die in dem Teig in Wärme umgewandelt wird, zwischen 10 J/g und 50 J/g liegt.

9. Verfahren nach einem der vorangehenden Ansprüche, **dadurch gekennzeichnet, dass** es vor dem Kneten einen Transport der Ingredienzien in eine Transportzone des Mischextruders ab Einspeisung der Ingredienzien in den Mischextruder bis zur Knetzone mit einer Scherung zwischen 10 s$^{-1}$ bis 50 s$^{-1}$ und vorzugsweise zwischen 20 s$^{-1}$ und 50 s$^{-1}$ umfasst.

10. Verfahren nach Anspruch 9, **dadurch gekennzeichnet, dass** die Transportzone gekoppelte, entgegengesetzt rotierende Schnecken umfasst.

11. Verfahren nach Anspruch 10, **dadurch gekennzeichnet, dass** die Dauer der Passage der Ingredienzien durch die Transportzone in der Größenordnung von 10 s bis 20 s liegt.

12. Verfahren nach einem der vorangehenden Ansprüche, **dadurch gekennzeichnet, dass** es ein Unter-Druck-setzen in einer Zone des Unter-Druck-setzens umfasst, die sich zwischen der Mischzone und der Extrudierzone befindet.

13. Verfahren nach Anspruch 12, **dadurch gekennzeichnet, dass** die Zone des Unter-Druck-setzens gegenlaufende Schnecken aufweist, die teilweise geschnitten sind, um so einen Abfluss stromabwärts sicher zu stellen.

14. Verfahren nach einem der vorangehenden Ansprüche, **dadurch gekennzeichnet, dass** es eine Kühlung der Ummantelungen wenigstens einer Zone und/oder der Achsen des Extruders auf eine Innentemperatur der Ummantelungen und/oder der Schnecken zwischen -15°C und +5°C umfasst.

15. Verfahren nach Anspruch 14, **dadurch gekennzeichnet, dass** es eine Kühlung von wenigstens zwei Zonen umfasst, die für jede Zone getrennt oder in Serie, insbesondere in Gegenstrom, durchgeführt wird.

16. Verfahren nach einem der vorangehenden Ansprüche, **dadurch gekennzeichnet, dass** es eine Mischung aller Ingredienzien stromaufwärts der Knetzone verwendet.

**17.** Verfahren nach einem der Ansprüche 1 bis 15, **dadurch gekennzeichnet, dass** es vor dem Kneten in einer ersten Stufe eine Vormischung von pulverförmigen Ingredienzien und wenigstens einer flüssigen und/oder geschmolzenen Fettmasse, dann in einer zweiten Stufe Zusatz von Wasser verwendet.

**18.** Verfahren nach einem der Ansprüche 1 bis 15, **dadurch gekennzeichnet, dass** vor einem Kneten in einer ersten Stufe eine Vormischung von pulverförmigen Ingredienzien mit Wasser und gegebenenfalls wenigstens einem Sirup und in einer zweiten Stufe Zusatz von Fettmasse erfolgen.

**19.** Verfahren nach einem der vorangehenden Ansprüche, **dadurch gekennzeichnet, dass** es für einen rohen Teig für Kekse bzw. Biskuits die folgende Gewichtszusammensetzung umfasst:

- 40% bis 70% Weizenmehl,
- 0% bis 20% Fettmasse,
- 0% bis 25% und vorzugsweise 14% bis 20% Zucker, in fester Form oder in Form wenigstens eines Sirups,
- 2% bis 30% zugefügtes Wasser,
  hierin enthalten der Wassergehalt des Sirups (der Sirupe), der/die gegebenenfalls vorliegt/vorliegen
- wenigstens einen Bestandteil zum Aufgehen,
- 0% bis 8% native Stärke,
- 0% bis 2% Salz,
- 0% bis 5% Mahlgut von recycelten Keksen bzw. Biskuits,
- 0% bis 0,1% wenigstens eines Emulgiermittels, z.B. Sojalecithin,
- 0% bis 0,5% wenigstens eines Säureregulators (Calciumhydrogenphosphat, Pyrophosphat bzw. Calciumpyrophosphat usw.),
- 0% bis 5% Milchpulver
- 0% bis 40% andere Proteinquellen (Eier, Pflanzenproteine, Tierproteine),
- gegebenenfalls andere Additive wie Aromastoffe, Reduktionsmittel und/oder Enzyme.

**20.** Verfahren nach Anspruch 19, **dadurch gekennzeichnet, dass** ein Bestandteil zum Aufgehen 0,2% bis 0,8% Backpulver oder auch 0,2% bis 0,4% Ammoniumbicarbonat und/oder Natriumbicarbonat umfasst.

**21.** Verfahren nach einem der Ansprüche 1 bis 18, **dadurch gekennzeichnet, dass** es für einen rohen, extrudierten Mürbteig die folgende Gewichtszusammensetzung umfasst:

| Trockene Ingredienzien: | |
|---|---|
| Weizenmehl | 50%-63% |
| Zucker in fester Form | 12%-33% |
| Salz in der Größenordnung von | 0,3% |
| Natriumbicarbonat | 0%-0,4% |
| Ammoniumbicarbonat | 0%-0,4% |
| Fett | 10%-20% |
| Andere Additive, wie z.B. Aromastoffe | 0%-1% |
| Andere Ingredienzien: | |
| Zugesetztes Wasser, einschließlich des Wassergehalts des Sirups oder der Sirupe, der/die gegebenenfalls vorliegt/vorliegen, | 1%-8% |
| Glukosesirup | 0%-4%. |

**22.** Verfahren nach Anspruch 18, **dadurch gekennzeichnet, dass** es für ein Band aus rohem, extrudiertem Teig für trockenen Biskuit bzw. trockenen Keks die folgende Gewichtszusammensetzung umfasst:

| Trockene Ingredienzien: | |
|---|---|
| Weizenmehl | 55%-70% |
| Zucker in fester Form | 17%-22% |
| Salz in der Größenordnung von | 0,3% |
| Ammoniumbicarbonat | 0,5%-1% |

(fortgesetzt)

| Trockene Ingredienzien: | |
|---|---|
| Natriumbicarbonat | 0%-0,5% |
| Calciumhydrogenphosphat | 0,3%-0,5% |
| Vollmilchpulver | 0%-4% |
| Sojalecithin | 0,1%-0,8% |
| andere Additive wie z.B. Aromastoffe, Säureregulatoren, Enzyme, Reduktionsmittel | 0%-1% |
| Andere Ingredienzien: | |
| Zugesetztes Wasser, einschließlich des Wassergehalts des Sirups oder der Sirupe, der/die gegebenenfalls vorliegt/vorliegen | 9%-20% |
| Fettmasse (Öl) | 6,5%-16% |
| Glukosesirup | 2%-5%. |

**23.** Verfahren nach den Ansprüchen 1 bis 18, **dadurch gekennzeichnet, dass** es für ein Band aus rohem, extrudiertem Teig für trockene Biskuits bzw. trockene Kekse mit geringem Fettgehalt die folgende Gewichtszusammensetzung umfasst:

| Trockene Ingredienzien: | |
|---|---|
| Weizenmehl | 53%-60% |
| Weizenstärke | 5%-8% |
| Zucker in fester Form | 15%-22% |
| Salz | 0,3%-0,6% |
| Ammoniumbicarbonat 0,5%-1% | |
| Natriumbicarbonat | 0,3%-0,6% |
| Calciumhydrogenphosphat | 0,3%-0,7% |
| Molkepulver | 3%-6% |
| andere Additive wie z.B. Aromastoffe, Säureregulatoren, Enzyme, Reduktionsmittel | 0%-1% |
| Andere Ingredienzien: | |
| Zugesetztes Wasser, einschließlich des Wassergehalts des Sirups oder der Sirupe, der/die gegebenenfalls vorliegt/vorliegen | 10%-20% |
| Fettmasse (Öl) | 0%-2% |
| Glukosesirup | 0%-5% |
| Emulgator | 0,5%-1%. |

**24.** Vorrichtung zur Durchführung des Verfahrens nach einem der vorangehenden Ansprüche, **dadurch gekennzeichnet, dass** sie umfasst:

- eine Knetzone mit einer Scherung zwischen 10 s$^{-1}$ und 150 s$^{-1}$;
- eine Einspeisungszone der Düse, um eine rechteckige Düse bei einem Druck zwischen 1 und 350 bar zu beschicken, wobei diese einen Schlitz (60) aufweist, dessen Weite e über die Gesamtbreite des Schlitzes regulierbar ist, wobei die Scherung in der Einspeisungszone der Düse zwischen 10 s$^{-1}$ und 150 s$^{-1}$ und vor-zugsweise zwischen 10 s$^{-1}$ und 60 s$^{-1}$ liegt.

**25.** Vorrichtung nach Anspruch 24, **dadurch gekennzeichnet, dass** die Einspeisungszone der Düse eine Zahnradpumpe umfasst, die stromabwärts der Knetzone liegt und durch diese mit einem Druck zwischen 0,5 und 20 bar gespeist wird, die auch genau stromaufwärts der Extrudierdüse liegt, welche sie mit dem zu extrudierenden Teig bei dem zum Ablaufen des Teigs in die Düse notwendigen Druck speist, wobei der Druck zwischen 10 und 350 bar und insbesondere zwischen 50 und 350 bar liegt.

**26.** Vorrichtung nach Anspruch 24 oder 25, **dadurch gekennzeichnet, dass** sie eine Formungskammer umfasst, die stromaufwärts von der rechteckigen Düse angeordnet ist.

**27.** Vorrichtung nach Anspruch 26, **dadurch gekennzeichnet, dass** die Formungskammer einen rechteckigen Schlitz (31) umfasst, dessen Länge (L) in der Mitte (32) größer als an seinen Rändern (34) ist.

**Claims**

1. Method of obtaining a strip of kneaded and extruded raw biscuit dough based on wheat flour, **characterised in that** it comprises:

   - kneading a mixture of the said raw dough based on wheat flour in a kneading area of a mixer-extruder, with shearing between 10 s$^{-1}$ and 150 s$^{-1}$, at a temperature of between 10° and 45°C,

   - pressurising the kneaded mixture, in a die feed area of the mixer-extruder, with a pressure of between 1 and 350 bar, the shearing in the die feed area being between 10 and 150 s$^{-1}$ and preferably between 10 and 60 s$^{-1}$,

   - extruding the kneaded and pressurised mixture, through a die fed by the die feed area.

2. Method according to Claim 1, **characterised in that** the kneading has a duration of 50 to 600 seconds and preferably around 150 seconds.

3. Method according to one of Claims 1 or 2, **characterised in that** the kneading area comprises eccentric cams, possibly kept filled by reverse-worm screws.

4. Method according to one of Claims 1 or 3, **characterised in that** the duration of the passage of the dough through the die feed area is around 10 to 120 seconds.

5. Method according to one of the preceding claims, **characterised in that** the die feed area has combined screw elements of the limited-shearing type.

6. Method according to one of Claims 1 to 4, **characterised in that** the pressurisation is carried out by a gear pump, fed by the kneading area at a pressure of 0.5 to 20 bar and preferably 2 bar, the pump driving the dough into the die in order to generate a flow pressure of the dough in the extrusion die of between 10 and 350 bar and more particularly between 50 and 350 bar.

7. Method according to one of the preceding claims, **characterised in that** the temperature of the strip discharged from the extrusion is between 18° and 45°C.

8. Method according to one of the preceding claims, **characterised in that** the specific mechanical energy dissipated in the dough is between 10 J/g to 50 J/g.

9. Method according to one of the preceding claims, **characterised in that** it comprises, before the kneading, transportation of the ingredients into a transport area of the mixer-extruder, from an ingredient input of the mixer-extruder, as far as the kneading area, with a shearing of between 10 s$^{-1}$ and 50 s$^{-1}$, and preferably between 20 s$^{-1}$ and 50 s$^{-1}$.

10. Method according to Claim 9, **characterised in that** the transportation area comprises combined contra-rotatory screws.

11. Method according to Claim 10, **characterised in that** the duration of passage of the ingredients in the transportation area is around 10 seconds to 20 seconds.

12. Method according to one of the preceding claims, **characterised in that** it comprises a pressurisation in a pressurisation area situated between the mixing area and the extrusion area.

13. Method according to Claim 12, **characterised in that** the pressurisation area has reverse-worm screws partially cut so as to ensure a leakage flow downstream.

14. Method according to one of the preceding claims, **characterised in that** it comprises a cooling of the sleeves, at least one area and/or of the shafts of the extruder to an internal temperature of the sleeves and/or screws of between -15°C and +5°C.

15. Method according to Claim 14, **characterised in that** it comprises a cooling of at least two areas, which is carried out separately for each area, or in series, in particular in counterflow.

16. Method according to one of the preceding claims, **characterised in that** it uses a mixing of all the ingredients upstream of the kneading area.

17. Method according to one of Claims 1 to 15, **characterised in that** it uses, before kneading, firstly, a premixing of powdery ingredients and at least one liquid and/or molten fat, and then secondly the addition of water.

18. Method according to one of Claims 1 to 15, **characterised in that** it uses, before kneading, firstly a premixing of powdery ingredients, with water and possibly at least one syrup, and secondly the addition of fat.

19. Method according to one of the preceding claims, **characterised in that** it comprises, for a raw dough for biscuits, a composition by weight of:

   - 40% to 7% wheat flour
   - 0% to 20% fat
   - 0% to 25% and preferably 14% to 20% sugar in solid form or in the form of at least one syrup
   - 2% to 30% added water including the water content of any syrup or syrups present
   - at least one rising element
   - 0% to 8% native starch
   - 0% to 2% salt
   - 0% to 5% ground recycled biscuits
   - 0% to 0.1% of at least one emulsifier, for example soya lecithin
   - 0% to 0.5% of at least one acidity corrector (monocalcic phosphate, pyrophosphate, etc)
   - 0% to 5% milk powder
   - 0% to 40% other sources of proteins (eggs, vegetable or animal proteins).
   - possibly other additives, such as flavourings, reducing agents and/or enzymes.

20. Method according to Claim 18, **characterised in that** a rising element comprises 0.2% to 0.8% rising powder, or 0.2% to 0.4% ammonium and/or sodium bicarbonate.

21. Method according to one of Claims 1 to 18, **characterised in that** it comprises, for an extruded raw short dough, a composition by weight of:

| Dry ingredients : | |
|---|---|
| Wheat flour | 50%-63% |
| Sugar in solid form | 12%-33% |
| Salt around | 0.3% |
| Sodium bicarbonate | 0%-0.4% |
| Ammonium bicarbonate | 0%-0.4% |
| Fat | 10%-20% |
| Other additives such as flavourings | 0%-1% |
| Other ingredients : | |
| Added water including the water content of any syrup or syrups present | 1%-8% |
| Glucose syrup | 0%-4% |

22. Method according to Claim 18, **characterised in that** it comprises, for a strip of extruded raw dough, for dry biscuits, the following composition by weight :

| Dry ingredients : | |
|---|---|
| Wheat flour | 55%-70% |
| Sugar in solid form | 17%-22% |
| Salt around | 0.3% |
| Ammonium bicarbonate | 0.5%-1% |
| Sodium bicarbonate | 0%-0.5% |
| Monocalcic phosphate | 0.3%-0.5% |
| Whole milk in powder form | 0%-4% |
| Soya lecithin | 0.1%-0.8% |
| Other additives such as flavourings, acidity correctors, enzymes, reducing agents | 0%-1% |
| Other ingredients : | |
| Added water including the water content of any syrup or syrups present | 9%-20% |
| Fat (oil) | 6.5%-16% |
| Glucose syrup | 2%-5% |

**23.** Method according to Claims 1 to 18, **characterised in that** it comprises, for a strip of extruded raw dough, for dry biscuits with a low fat content, the following composition by weight:

| Dry ingredients : | |
|---|---|
| Wheat flour | 53%-60% |
| Wheat starch | 5%-8% |
| Sugar in solid form | 15%-22% |
| Salt | 0.3%-0.6% |
| Ammonium bicarbonate | 0.5%-1% |
| Sodium bicarbonate | 0.3%-0.6% |
| Monocalcic phosphate | 0.3%-0.7% |
| Lactoserum powder | 3%-6% |
| Other additives such as flavourings, acidity correctors, enzymes, reducing agents | 0%-1% |
| Other ingredients : | |
| Added water including the water content of any syrup or syrups present | 10%-20% |
| Fat (oil) | 0%-2% |
| Glucose syrup | 0%-5% |
| Emulsifier | 0.5%-1% |

**24.** Device for implementing the method according to one of the preceding claims, **characterised in that** it comprises:

- a kneading area with shearing of between 10 $s^{-1}$ and 150 $s^{-1}$,

- a die feed area for feeding a rectangular die to a pressure of between 1 and 350 bar, having a slot (60) whose thickness $\underline{e}$ is adjustable over the entire, width of the slot, the shearing in the die feed area being between 10 $s^{-1}$ and 150 $s^{-1}$, and preferably between 10 $s^{-1}$ and 60 $s^{-1}$.

**25.** Device according to Claim 24, **characterised in that** the die feed area comprises a gear pump situated downstream of the kneading area and supplied by it at a pressure of between 0.5 and 20 bar, situated also just upstream of the extrusion die, which it supplies with dough to be extruded at the pressure necessary for the flow of the dough in the die, that is to say a pressure of between 10 and 350 bar and in particular between 50 and 350 bar.

**26.** Device according to one of Claims 24 or 25, **characterised in that** it comprises a profiling chamber disposed upstream of the rectangular die.

**27.** Device according to Claim 26, **characterised in that** the profiling chamber comprises a rectangular slot (31) whose length (L) is greater at the centre (32) than at the edges (34).